# EUROPEAN PATENT APPLICATION

(11) **EP 3 744 691 A1**
(43) Date of publication of application: **02.12.2020**
(21) Application number: 19177028.8
(22) Date of filing: 28.05.2019
(51) Int. Cl.: C02F 1/32

(54) **DEVICE FOR PURIFYING A FLUID WITH UV-LIGHT**

(71) Applicant: Watersprint AB, 223 81 Lund (SE)
(72) Inventor: Uvnäs, Krister, 247 35 Södra Sandby (SE); Kokkola, Linda, 223 52 Lund (SE); Lindqvist, Mathias, 227 31 Lund (SE)
(74) Representative: AWA Sweden AB

(57) **Abstract**

A device (100) for purifying a fluid, the device (100) comprising: a purifying chamber (101) having a chamber fluid inlet (102) arranged at a bottom of the purifying chamber (101) and a chamber fluid outlet (104) arranged at a top of the purifying chamber (101), wherein the top is opposite the bottom; a UV transparent window (106) configured to permit UV light to enter the purifying chamber (101), a UV light source (108) configured to emit UV light through the UV transparent window (106) into the purifying chamber (101), wherein the chamber fluid inlet (102) comprises a fluid distributor (110) comprising a plurality of flow channels (206) each having an outlet (208) facing the purifying chamber (101) at the bottom thereof, wherein the outlets (208) of the plurality of flow channels (206) are evenly distributed across the bottom of the purifying chamber (101).

## Description

### Field of the invention

The invention relates to the field of purifying fluid, in particular it relates to a device for purifying a fluid.

### Background art

Decontamination by means of ultra violet (UV) light is a well-established and reliable technique for use in systems for purifying fluids, in particular systems suitable for providing potable water. These systems are efficient and perform satisfactory without the use of any chemicals. UV light in fluid purification systems has the purpose of destroying the metabolic activity, mainly the DNA of bacteria, or other microorganisms being present in the water.

Typically, raw water is treated in a water supply plant whereafter this treated, refined water, frequently referred to as tap water, is made available to the end users via a water distribution system. In countries with rigorous water quality regulation, the term tap water is interchangeable with the term potable water. Elsewhere, tap water should undergo further treatment prior to being consumed. In both described cases, the tap water remains susceptible to contamination, in particular to biological infection. There have been examples when large communities and towns have had their water being infected even though their tap water on normal basis would be potable water.

Thus, there is room for improvements to systems for purifying fluids such as water.

### Summary of the invention

It is an object of the present inventive concept to at least reduce the above stated issues by providing an improved device for purifying a fluid.

According to a first aspect, there is provided a device for purifying a fluid, the device comprising: a purifying chamber having a chamber fluid inlet arranged at a bottom of the purifying chamber and a chamber fluid outlet arranged at a top of the purifying chamber, wherein the top is opposite the bottom; a UV transparent window configured to permit UV light to enter the purifying chamber; a UV light source configured to emit UV light through the UV transparent window into the purifying chamber; wherein the chamber fluid inlet comprises a fluid distributor comprising a plurality of flow channels having outlets facing the purifying chamber at the bottom thereof, wherein the outlets of the plurality of flow channels are evenly distributed across the bottom of the purifying chamber.

The present device provides a flow path from the chamber fluid inlet to the chamber fluid outlet, which improves flow of fluid through the device and the ability to efficiently purify fluid. The device may be attached to for example a tap water pipeline. The device provides the end user with a reduced dependency on public services for decontaminating water. By the use of the device, outbreaks where large communities are supplied with contaminated water may be avoided. By placing the device closer to an end user, and thereby treating water closer to the end user, the risk of water being contaminated while being supplied via the infrastructure water system is reduced. The plurality of flow channels of the fluid distributor may reduce turbulence in the fluid flowing in the purifying chamber. Further, by distributing the incoming flow of fluid into the purifying chamber a more even flow of the fluid within the purifying chamber may be achieved. An even flow will do so that all the fluid will stay in the purifying chamber within a time period for being affected by the UV light. By the even flow of the fluid through the purifying chamber the power of the UV light source may be reduced. This since it will be safeguarded that the UV light will affect all the fluid. Hence, the design of device allows all fluid passing through the purifying chamber to be evenly exposed to UV light, which increases the efficiency of purification and decontamination of the fluid. By treating the fluid with UV light, the fluid is decontaminated and purified in an efficient manner. The UV transparent window provides the UV light source with a shield such that fluid does not come in direct contact with the UV light source.

The fluid distributor may comprise a first panel having a plurality of through openings; and a second panel having a plurality of through openings. The second panel may be parallel arranged with respect to the first panel. The second panel may be arranged at a distance from the first panel. The through openings of the second panel may be complementary to the through openings of the first panel. The plurality of through openings of the first and second panels may together form the plurality of flow channels. This design of the fluid distributor may improve the flow of fluid into the purifying chamber. By the through openings of the second panel being complementary to the through openings of the first panel, the fluid distributor may be non-transparent to light, especially the UV-light emitted into the purifying chamber by the UV-light source. In other words, by the through openings of the second panel being complementary to the through openings of the first panel the fluid distributor will not have any see-through flow channels. This will reduce the amount of UV-light that can escape the purifying chamber.

The device may comprise a device fluid inlet. The second panel may face the device fluid inlet. The second panel may be arranged at a distance from the device fluid inlet. An area of the second panel covering a projection of the device fluid inlet may be without through openings. This design may improve the flow of fluid into the purifying chamber. A fluid flowing towards an area of the second panel without any through openings will be distributed outwards from the area of intersection to the through openings of the second panel.

The plurality of flow channels may also have inlets facing the device fluid inlet. The inlets of the plurality of flow channels may be evenly distributed across a surface of the fluid distributor facing the device fluid inlet.

The fluid distributor may comprise a spacer arranged between the first and second panels. The spacer may allow for the device to receive a flow of fluid having high pressure. The spacer may also provide a space between the first and second plates so that fluid may easily pass through the fluid distributor into the purifying chamber.

The through openings of the first and second panels may be arched. The arched form of the through holes may improve the evenness of distribution of fluid into the purifying chamber. The through openings may be arched around a center of the first and second panels.

The fluid distributor may comprise a panel formed by sintering, wherein a plurality of flow channels may be formed as micro channels within the sintered material. The flow channels formed as micro channels within the sintered material have a plurality of inlets and a plurality of outlets. Sintering may allow for the formation of complex geometries in an easy manner. Sintered materials have good mechanical characteristics and thus, may provide the fluid distributor with stable and long-lasting panel. Sintering may further provide a cost-efficient device. A sintered panel may also provide a surface being non-transparent to the UV-light.

The fluid distributor may comprise a perforated panel comprising a plurality of through holes, wherein the plurality of through holes may constitute the plurality of flow channels. This design may improve the evenness of the flow of fluid into the purifying chamber.

The one or more panels of the fluid distributor may be made of an UV-reflective material. The UV-reflective material may be polytetrafluoroethylene, PTFE. An inside of the purifying chamber may be lined with an UV-reflective material. The UV-reflective material of the lining may be PTFE. It is preferred that the PTFE is an optical PTFE. It is preferred that the PTFE is provided as a layer being thicker than 5 mm. A PTFE material may be beneficial to use in the device if water is to be purified since it does not absorb any water. An UV-reflective material may benefit the effectiveness of purification in the purification chamber since light UV light emitted from the UV light source may be reflected back into the purifying chamber. Thus, a higher efficiency of the purification mechanism may be achieved.

The chamber fluid outlet may comprise a plurality of flow channels arranged at a circumferential at the top of the purifying chamber. By this design, turbulence of the fluid inside the purification chamber may be avoided. A low amount of turbulence of the fluid within the purifying chamber may increase the evenness of the flow of fluid therein. Hence, efficiency of the purification mechanism of the device, may be enhanced. It is preferred that the outlet flow channels are evenly distributed at the top of the purifying chamber. An even distribution of the outlet flow channels may further decrease the risk of turbulence in the purifying chamber. An even distribution of the outlet flow channels may further increase an evenness of the flow of fluid within the purifying chamber.

The UV transparent window may be arranged at the top of the purifying chamber. This provides UV light emitting in an opposite direction to the flow direction of fluid flowing through the purifying chamber. By this design, UV light may be emitted through the fluid stream in an efficient manner such as to improve the purification efficiency of the device.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or acts of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief Description of the Drawings

The above and other aspects of the present invention will now be described in more detail, with reference to the appended drawings showing embodiments of the invention. The figures should not be considered limiting the invention to the specific embodiment; instead they are used for explaining and understanding the invention.
Figure 1 illustrates a device for purifying a fluid.
Figure 2 illustrates an exploded view of a device for purifying a fluid.
Figure 2A illustrates a first panel of a fluid distributor.
Figure 2B illustrates a second panel of a fluid distributor.
Figure 2C illustrates an example of a spacer of a fluid distributor.
Figure 3 illustrates a panel of a fluid distributor.

As illustrated in the figures, the sizes of layers and regions are exaggerated for illustrative purposes and, thus, are provided to illustrate the general structures of embodiments of the present invention. Like reference numerals refer to like elements throughout.

### Description of Embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

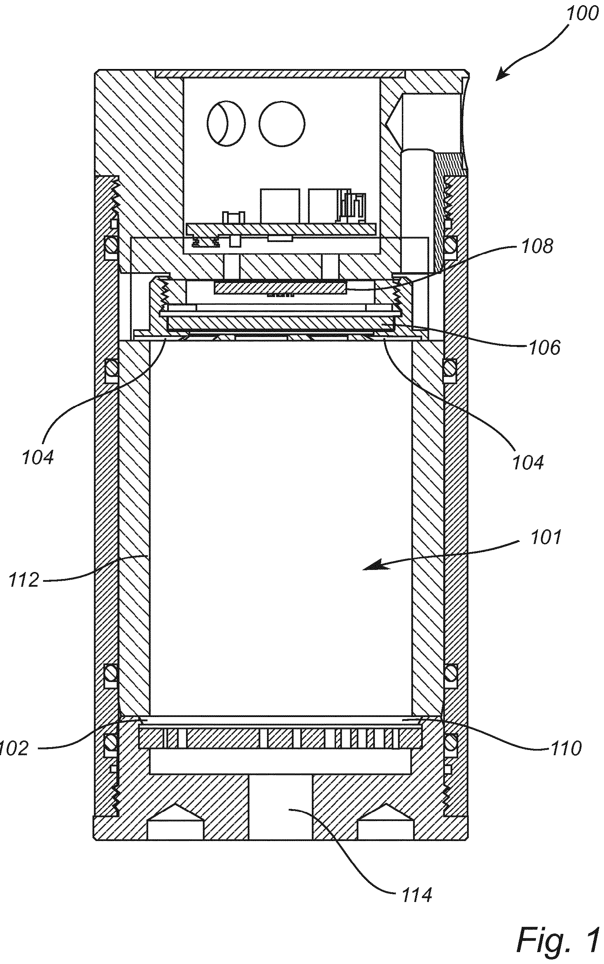

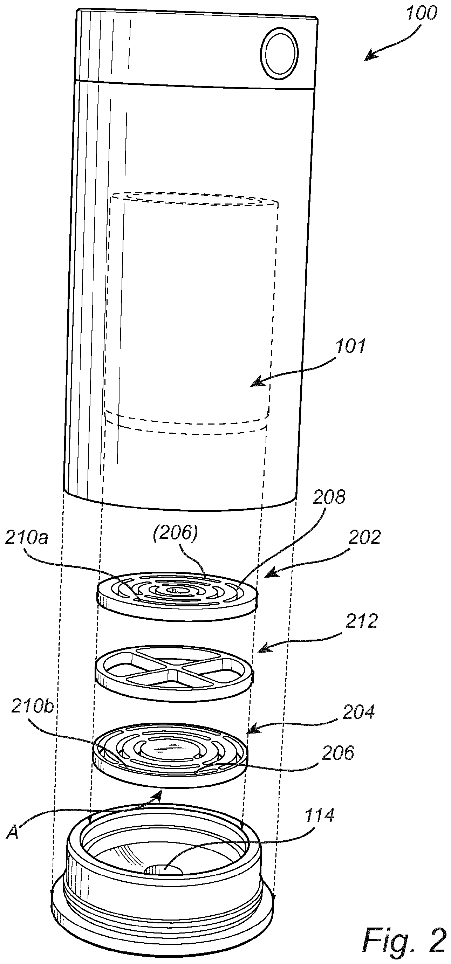

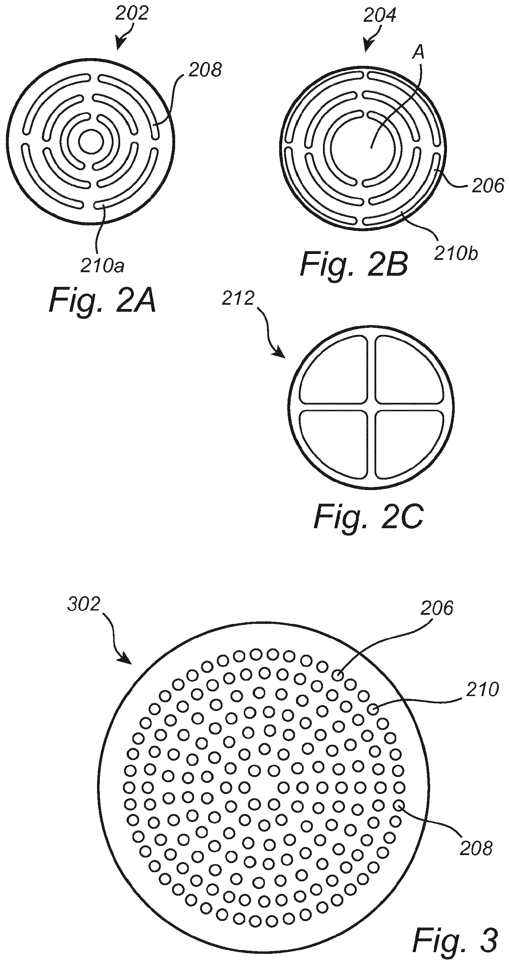

With reference to figures 1 and 2, there is disclosed a device 100 for purifying a fluid. The device 100 comprises a purifying chamber 101, wherein the fluid is purified when the device 100 is in use. The device 100 may be installed in a pipeline for water supply in order to purify water as the fluid. Thus, the device 100 may be used to purify water flowing through the purifying chamber 101. By using the device 100 for purifying water, it may become easier to supply clean potable water to end consumers. The purifying chamber 101 comprises a chamber fluid inlet 102 arranged at a bottom of the purifying chamber 101. The purifying chamber 101 further comprises a chamber fluid outlet 104 arranged at a top of the purifying chamber 101. When in use, the fluid to be purified enters the purifying chamber 101 at the chamber fluid inlet 102 and exits the purifying chamber 101 at the chamber fluid outlet 104. The top of the purifying chamber 101 is opposite to the bottom of the purifying chamber 101. Above the terms top and bottom of the purifying chamber 101 is used. It to be understood that the use of top and bottom is not limiting the purifying chamber 101 to be oriented in a specific manner in space. Instead, the wording top and bottom are only to be indicating that this two portions of the purifying chamber 101 are opposite each other.

When a fluid enters the purifying chamber, the flow direction of the fluid is from the bottom of the purifying chamber 101 to the top of the purifying chamber 101. The flow direction has a straight path from the chamber fluid inlet 102 to the chamber fluid outlet 104. This ensures an even flow of fluid through the purifying chamber. A straight flow path may further improve the purification of the fluid due to even exposure of UV light.

The purifying chamber 101 may be cylindrical. The purifying chamber 101 may be circular cylindrical. The purifying chamber 101 may have a diameter between 30 mm and 70 mm. The purifying chamber 101 may have a diameter of 43 mm. The purifying chamber 101 may have a height between 40 mm and 120 mm.

The chamber fluid inlet 102 comprises a fluid distributor 110. The flow distributor 110 comprises a plurality of flow channels 206 having outlets 208 facing the purifying chamber 101 at the bottom of the purifying chamber 101. The outlets 208 of the plurality of flow channels 206 are evenly distributed across the bottom of the purifying chamber 101. When a fluid enters the purifying chamber 101 through the chamber fluid inlet 102, the fluid passes through the fluid distributor 110 where it is distributed into the purifying chamber 101. The fluid distributor 110 divides an incoming flow of fluid to be purified by the device 100 into a plurality of sub-flows. The sub-flows are then evenly distributed into the purifying chamber 101 along a cross section of the purifying chamber 101 at the bottom of the purifying chamber 101. The cross section at the bottom of the purifying chamber 101 is orthogonal to the flow direction. The chamber fluid inlet 102 and the fluid distributor 110 will be discussed in more detail below in connection with figures 2A-C and 3.

The chamber fluid outlet 104 may comprise a plurality of flow channels arranged at a circumferential at the top of the purifying chamber 101. Circumferentially distributed flow channels may provide the purifying chamber with an even exit of fluid flowing out of the purifying chamber 101. The flow channels of the chamber fluid outlet 104 may be arranged around the UV transparent window 106. The flow channels of the chamber fluid outlet 104 may be evenly distributed at the circumferential at the top of the purifying chamber 101. The flow channels of the chamber fluid outlet 104 may decrease the turbulence occurring within the purifying chamber 101 when fluid flows through the device 100. The flow channels may ensure an exit flow of fluid from the purifying chamber 101 at an even flow rate.

The device 100 further comprises a UV transparent window 106 configured to permit UV light to enter the purifying chamber 101. The UV transparent window 106 may be made of quartz glass. By permitting UV light into the purifying chamber 101, fluid within the purifying chamber 101 is exposed to UV light which decontaminates and purifies the fluid. The device 100 further comprises a UV light source 108 configured to emit UV light through the UV transparent window 106 into the purifying chamber 101. The UV light source 108 may comprise a plurality of UV LEDs. The UV transparent window 106 may be arranged at the top of the purifying chamber 101. Thus, the UV light may enter the purifying chamber 101 in the opposite direction to the flow path of the fluid. This may increase the decontamination ability of the device 100. This may also lower the needed power of the UV light source 108. This may prolong the lifetime of the UV light source 108. The UV transparent window 106 may prevent any fluid from coming into direct contact with the UV light source 108.

The purifying chamber 101 may comprise an inside being lined with a layer of UV reflective material. The UV reflective material may be polytetrafluoroethylene, PTFE. It is preferred that the PTFE is an optical PTFE. A PTFE material does not absorb water, and thus it may be a suitable material to line the inside with when the purifying chamber 101 is to be used for purifying water. PTFE materials are reflective to UV-light which may benefit the effectiveness of purification in the purification chamber since UV light emitted from the UV light source 108 may be reflected back into the purifying chamber 101. Thus, a higher efficiency of the purification mechanism may be achieved. Also, the UV light source 108 may be run at a lower power. This may prolong the lifetime of the UV light source 108.

The device 100 may comprise a device fluid inlet 114. The device fluid inlet 114 may be centrally arranged at a bottom of the device 100.

Turning to Figures 2A through 2C an example of a design of the fluid distributor 110 will be discussed. According to this exemplary embodiment of the fluid distributor 110, the fluid distributor 110 comprises a first panel 202 and a second panel 204. The first panel 202 comprises a plurality of through openings 210a. The second panel 204 comprises a plurality of through openings 210b. When forming the fluid distributor 110 the second panel 204 is parallel arranged with respect to the first panel 202. Further, when forming the fluid distributor 110 the second panel 204 is arranged at a distance from the first panel 202. The fluid distributor may further comprise a spacer 212. An example of a spacer 212 is illustrated in figure 2C. The spacer 212 is arranged between the first and second panels 202, 204 to provide the distance between them. The spacer 212 may be circular. The spacer 212 may have a diameter between 35 mm and 70 mm. The spacer 212 may have a diameter of 43 mm. The spacer 212 may have a thickness of at least 1 mm. The spacer 212 may have a thickness of 1 mm. A thicker spacer may provide the fluid distributor 110 with a higher reflective capability. Moreover, when forming the fluid distributor 110 the first and second panels 202, 204 are arranged to overlap each other, preferably fully overlap each other. The through openings 210a of the first panel 202 may be complementary to the through openings 210b of the second panel 204. Hence, when forming the fluid distributor 110 areas with no through openings of the first panel 202 will cover projections of the through openings 210b of the second panel 204. Further, when forming the fluid distributor 110 areas with no through openings of the second panel 204 will cover projections of the through openings 210a of the first panel 202. By this design, the fluid distributor 110 will be almost non transparent for the UV-light. Hence, the through openings 201a, 210b of the first and second panels 202, 204 are complementary formed such that substantially no UV light is permitted to exit the purifying chamber through the flow distributer 110. This may increase the efficiency of purification in the purification chamber 101. The through openings 210a, 210b of the first and second panels 202, 204 together form the plurality of flow channels 206. The first panel 202 may be provided with 10-100 through openings. The second panel 204 may be provided with 10-100 through openings. The through openings 210a, 210b of the first and second panels 202, 204 may be arched. An arched shape of the through openings 210a, 210b may improve the evenness of distribution of fluid into the purifying chamber 101. The through openings of each of the first and second panels 202, 204, may be arched around a center of the respective first and second panel 202, 204. The first and second panels 202, 204 may each have an extension corresponding to an area of the bottom of the purifying chamber 101. The first and second panels 202, 204 may be circular. The first and second panels 202, 204 may have a diameter between 35 mm and 70 mm. The first and second panels 202, 204 may have a diameter of 43 mm. The first and second panels 202, 204 may have a thickness of at least 1 mm. The first and second panels 202, 204 may have a thickness of 1 mm. The arched through openings 210a, 210b of the first and second panels 202, 204 may have a width between 1 and 3 mm. By the first and second panels 202, 204 being made thicker, the reflective capability of the fluid distributor 110 may increase. The second panel 204 of the fluid distributor 110 may be provided with an area A without any through openings. The area A may be facing the device fluid inlet 114 and arranged at a distance therefrom. Further, the area A may cover a projection of the device fluid inlet 114. Hence, the area A is arranged such that it engages the flow of fluid to be purified entering the device 100 through the device fluid inlet 114. This will help distributing the incoming flow of fluid towards the plurality of flow channels 206 of the fluid distributor 110.

Another example of a design of the fluid distributor 110 will be discussed in connection with figure 3. According to this exemplary embodiment, the fluid distributor 110 comprises a perforated panel 302 comprising a plurality of through holes 210. The plurality of through holes 210 is in this embodiment of the fluid distributor 110 forming the plurality of flow channels 206. The perforated panel 302 may have an extension corresponding to an area of the bottom of the purifying chamber. The perforated panel 302 may be circular. The perforated panel 302 may have a diameter between 35 mm and 70 mm. The perforated panel 320 may have a diameter of 43 mm. The perforated panel 302 may have a thickness of at least 3 mm. The perforated panel 302 may have a thickness of 3 mm. The through holes 210 may have a diameter in the range of 1-2 mm. The perforated panel may comprise 10-20 through holes per cm².

One or more of the panels 202, 204, 302 of the flow distributor 110 may be made of UV light reflective material, especially PTFE. When a panel is made of UV light reflective material, it may provide the purifying chamber 101 with increased reflective capabilities. This may improve the purification efficiency of the purification chamber 101. The UV light reflective material may allow the UV light to be reflected back into the purifying chamber 101, and thus improve the purification capacities of the device 100.

The person skilled in the art realizes that the present invention by no means is limited to the preferred embodiments described above. On the contrary, many modifications and variations are possible within the scope of the appended claims.

For example, the fluid distributor 110 may comprise a panel formed by sintering. In a sintered panel, the plurality of flow channels 206 may be formed as micro channels within the sintered material. Hence, the fluid distributor 110 be formed by a panel made from sintering of a granular material and having a plurality of micro channels therein constituting the plurality of flow channels 206.

Alternatively, the first and/or the second panel 202, 204, illustrated in connection with figures 2A-C, may be formed by sintering and hence additionally comprising micro channel constituting a portion of the plurality of flow channels 206. Further alternatively, the perforated panel 302, illustrated in connection with figure 3 may be formed by sintering and hence additionally comprising micro channel constituting a portion of the plurality of flow channels 206.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A device (100) for purifying a fluid, the device (100) comprising:
a purifying chamber (101) having a chamber fluid inlet (102) arranged at a bottom of the purifying chamber (101) and a chamber fluid outlet (104) arranged at a top of the purifying chamber (101), wherein the top is opposite the bottom;
a UV transparent window (106) configured to permit UV light to enter the purifying chamber (101); and
a UV light source (108) configured to emit UV light through the UV transparent window (106) into the purifying chamber (101),
wherein the chamber fluid inlet (102) comprises a fluid distributor (110) comprising a plurality of flow channels (206) each having an outlet (208) facing the purifying chamber (101) at the bottom thereof, wherein the outlets (208) of the plurality of flow channels (206) are evenly distributed across the bottom of the purifying chamber (101).

2. The device (100) according to claim 1, wherein the fluid distributor (110) comprises:
a first panel (202) having a plurality of through openings (210a), and
a second panel (204) having a plurality of through openings (210b),
wherein the second panel (204) is parallel arranged with respect to the first panel (202) at a distance therefrom,
wherein the through openings (210b) of the second panel (204) are complementary to the through openings (210a) of the first panel (202).

3. The device (100) according to claim 2, further comprising a device fluid inlet (114), wherein the second panel (204) is facing the device fluid inlet (114) and is arranged at a distance therefrom, wherein an area (A) of the second panel (204) covering the device fluid inlet (114) is without through openings (210).

4. The device (100) according to claim 2 or 3, wherein the fluid distributor (110) further comprises a spacer (212) arranged between the first and second panels (202, 204).

5. The device (100) according to any one of claims 2-4, wherein the through openings (210) of the first and second panels (202, 204) are arched.

6. The device (100) according to claim 1, wherein the fluid distributor (110) comprises a panel formed by sintering, wherein the plurality of flow channels (206) is formed as micro channels within the sintered material.

7. The device (100) according to claim 1, wherein the fluid distributor (110) comprises a perforated panel (302) comprising a plurality of through holes (210), wherein the plurality of through holes (210) constitutes the plurality of flow channels (206).

8. The device (100) according to any one of claims 2-7, wherein the one or more panels (202, 204, 302) of the fluid distributor is made of an UV light reflective material.

9. The device (100) according to claim 8, wherein the UV light reflective material comprises polytetrafluoroethylene, PTFE.

10. The device (100) according to any one of claims 1-8, wherein an inside of the purifying chamber (100) is lined (112) with an UV light reflective material.

11. The device (100) according to claim 10, wherein the UV light reflective material comprises polytetrafluoroethylene, PTFE.

12. The device (100) according to any one of claims 1-11, wherein the chamber fluid outlet (104) comprises a plurality of flow channels arranged at a circumferential at the top of the purifying chamber (101).

13. The device (100) according to any one of claims 1-12, wherein the UV transparent window (106) is arranged at the top of the purifying chamber (101).
